# EUROPEAN PATENT APPLICATION

(11) **EP 1 162 844 A2**
(43) Date of publication of application: **12.12.2001**
(21) Application number: 01111069.9
(22) Date of filing: 08.05.2001
(51) Int. Cl.: H04N 7/24

(54) **Dynamic feature extraction from compressed digital video signals for content-based retrieval in a video playback system**

(30) Priority: 17.05.2000 US 573467
(71) Applicant: MITSUBISHI DENKI KABUSHIKI KAISHA, Tokyo 100-8310 (JP)
(72) Inventor: Vetro, Anthony, Staten Island, NY 10314 (US); Divakaran, Ajay, Denville, NJ 07834 (US); Sun, Huifang, Cranbury, NJ 08572 (US); Asai, Kohtaro, Yokohama-shi 230-0051 (JP); Nishikawa, Hirofumi, Fujisawa-shi 252-0805 (JP); Sekiguchi, Shun-ichi, Yamato-shi 242-0024 (JP); Murakami, Tokumichi, Chigasaki-shi 253-0085 (JP); Moriya, Yoshimi, Yokohama-shi 221-0021 (JP)
(74) Representative: Pfenning, Meinig & Partner

(57) **Abstract**

A video playback system includes a receiver coupled to receive an input compressed digital video signal. An encoder, coupled to the receiver, dynamically extracts features from the input compressed digital video signal and encodes the extracted features as content descriptors, while receiving the input compressed digital video signal. A search engine, coupled to the receiver, accesses the received input compressed digital video signal according to the content descriptors via a user interface.

## Description

### FIELD OF THE INVENTION

This invention relates generally to extracting features from a compressed digital video signal, and more particularly, to accessing content of the video signal using the extracted features.

### BACKGROUND OF THE INVENTION

Recently, a number of standards have been developed for communicating visual information. For video signals, the most widely used standards include MPEG-1 (for storage and retrieval of moving pictures), MPEG-2 (for digital television) and H.263, see ISO/IEC JTC1 CD 11172, MPEG, "Information Technology - Coding of Moving Pictures and Associated Audio for Digital Storage Media up to about 1.5 Mbit/s - Part 2: Coding of Moving Pictures Information," 1991, LeGall, "MPEG: A Video Compression Standard for Multimedia Applications," Communications of the ACM, Vol. 34, No. 4, pp. 46-58, 1991, ISO/IEC DIS 13818-2, MPEG-2, "Information Technology - Generic Coding of Moving Pictures and Associated Audio Information - Part 2: Video," 1994, ITU-T SG XV, DRAFT H.263, "Video Coding for Low Bitrate Communication," 1996, ITU-T SG XVI, DRAFT13 H.263+ Q15-A-60 rev.0, "Video Coding for Low Bitrate Communication," 1997.

These standards are relatively low-level specifications that primarily deal with the spatial and temporal compression of video signals. As a common feature, these standards perform compression on a per frame basis. With these standards, one can achieve high compression ratios for a wide range of applications.

Newer video coding standards, such as MPEG-4 (for multimedia applications), see "Information Technology -- Generic coding of audio/visual objects," ISO/IEC 14496-2: 1999 (MPEG4 Visual), allow arbitrary-shaped objects to be encoded and decoded as separate video object planes (VOP) and groups of frames (GOF). The objects can be visual, audio, natural, synthetic, primitive, compound or combinations thereof.

This emerging standard is intended to enable multimedia applications, such as interactive video, where natural and synthetic materials are integrated, and where the Internet provides universal access. For example, one might want to "cut-and-paste" a moving figure or object from one video to another. In this type of application, it is assumed that the objects in the multimedia content have been identified through some type of segmentation process, see for example, U.S. Patent Application Sn. 09/326,750 "Method for Ordering Image Spaces to Search for Object Surfaces" filed on June 4, 1999 by Lin et al.

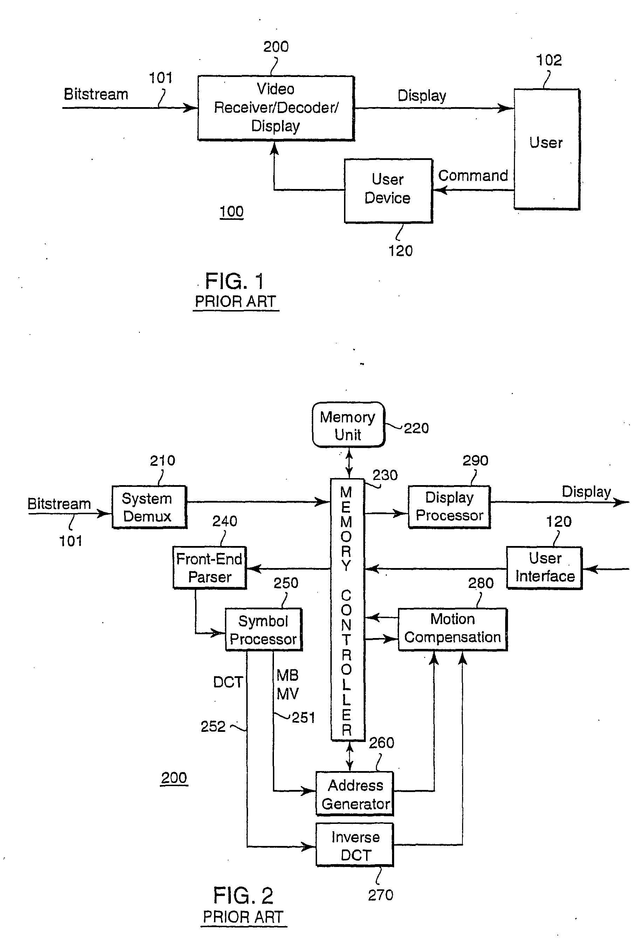

Figure 1 shows a traditional video playback system 100 at a high-level. The playback system 100 includes a video receiver/decoder/display referred to as "receiver" 200 hereinafter. The receiver 200 is coupled to a user interface 120, e.g. a remote controller, keyboard, or mouse. A video program 101, in the form of a compressed digital input bitstream 101, originates from a storage device, camera, or is received via a broadcast channel. The receiver 200 accepts the input bitstream, decodes it, and ultimately displays the decoded video to a user 102. The display can be a television or a computer terminal.

In the prior art, permitted access to local video content is relatively simple. The user interface provides a limited set of commands to traverse ("access") the content of the video, such as, fast-forward, play, and rewind. If the content is stored on a DVD, then random access may be possible. In any case, user access is based on the **position** of frames in the video, where the position is either defined by time or by frame offset from the beginning of the video. The **content** of the video is not considered while accessing the video.

Without knowledge of the content, it is difficult to provide the user with any advanced means of accessing the content. For example, if the user wanted to skip ahead to a portion of the video where the content is a scoring opportunity in a sporting event, it is difficult to do so with only the fast-forward, play, and rewind commands.

This limited set of positional access commands only allows the user to locate a desired position in the video. Content-based access is not supported by current video playback systems. Content-based access requires some prior analysis of the video to define and locate portions of interest to a particular user.

Some playback systems may have limited content-based access, for example, specific frames of interest can be marked and annotated, and the location of the marked frames and annotation can be stored in a memory. Then later, the user can skip ahead to a previously marked frame and begin playback there. However, systems that offer this video annotation capability are generally not interoperable with other devices, and require considerable user interaction. That is, the user has to view the frames, and select the frames of particular interest.

As a result, the prior art video playback system and user are constrained to be co-located. In other words, the user must have immediate access to the content. Prior art systems generally do not allow content-based access in the case where the content is remotely located. For example, a user accessing video data stored on a remote server via a Web browser and the Internet.

In the future, content-based access and interoperable playback systems will be a critical feature to support. Support for content-based access in an interoperable manner will require meta-data that describe the content.

The prior receiver 200 is shown in greater detail in Figure 2. The decoding takes place in two basic stages. During a first stage, features are extracted from the compressed video, and during a second stage, the extracted features are used to reconstruct the video. To support content-based access, the present invention, as described below, decodes in a different manner.

### First Stage of Decoding

A demultiplexer (demux) 210 accepts the compressed bitstream 101. The demux synchronizes to packets of the received bitstream, and separates the video, audio and data portions of the bitstream into primary bitstreams. The compressed data are sent to a shared memory unit 220 using a memory controller 230. A front-end parser 240 parses the compressed video. The parser 240 is responsible for extracting the higher level syntax of the bitstream, e.g., above the slice-layer in the MPEG-2 standard.

Below this level, bits are transferred to a symbol processor 250, which is mainly responsible for variable-length decoding (VLD) operations. In the MPEG bitstream, for example, the motion vectors and discrete cosine transform (DCT) coefficients are encoded by variable-length codes, along with other information such as macroblock modes, etc.

### Second Stage of Decoding

From the symbol processor, macroblock (MB) and motion vector (MV) information 251 are sent to an address generator 260, and DCT information 252 is sent to an inverse DCT (IDCT) 270.

The address generator is responsible for generating the memory addresses where the video data are to be written and read in the memory unit 220. The address generator depends heavily on such information as a prediction mode, location of current block, and motion vector value. Some of this information is passed on to a motion compensation unit 280, which combines data read from the memory unit with data received from the IDCT 270.

In the case of intra mode prediction, there may be no data read from memory because data read from memory are predictive information. Reconstructed data are written to the memory 220 from the motion compensation unit 280.

When it is time for this data to be displayed, a display processor 290 reads the data for any additional processing that may be needed. The user interface 120 interacts with the memory controller 230 so that the limited, positional access, described above, can be realized.

The most recent standardization effort taken on by the MPEG committee is that of MPEG-7, formally called "Multimedia Content Description Interface," see "MPEG-7 Context, Objectives and Technical Roadmap," ISO/IEC N2861, July 1999. Essentially, this standard plans to incorporate a set of descriptors and description schemes (DS) that can be used to describe various types of multimedia content. The descriptor and description schemes are associated with the content itself and allow for fast and efficient searching of content that is of interest to a particular user.

It is important to note that the MPEG-7 standard is not meant to replace previous coding standards. Rather, it builds on previous standard representations, especially MPEG-4, because the multimedia content can be decomposed into different objects and each object can be assigned a unique set of descriptors. Also, the standard is independent of the format in which the content is stored.

The primary application of MPEG-7 is expected to be search and retrieval applications, see "MPEG-7 Applications," ISO/IEC N2861, July 1999. In a simple application environment, a user specifies some attributes of a particular object. At this low-level of representation, these attributes may include descriptors that describe the texture, motion and shape of the particular object. A method of representing and comparing shapes is described in U.S. Patent Application Sn. 09/326,759 "Method for Ordering Image Spaces to Represent Object Shapes" filed on June 4, 1999 by Lin et al., and a method for describing the motion activity has been described in U.S. Patent Application Sn. 09/406,444 "Activity Descriptor for Video Sequences" filed on September 27, 1999 by Divakaran et al.

To obtain a higher-level of representation, one may consider more elaborate description schemes that combine several low-level descriptors. In fact, these description schemes may even contain other description schemes, see "MPEG-7 Multimedia Description Schemes WD (V1.0)," ISO/IEC N3113, December 1999 and U.S. Patent Application Sn. 09/385,169, "Method for representing and comparing multimedia content," filed August 30, 1999 by Lin et al.

The descriptors and description schemes that will be provided by the MPEG-7 standard can be considered as either syntactic or semantic. Syntactic information refers to the physical and logical signal aspects of the content. Semantic information refers to the conceptual meaning of the content. For a video sequence, the syntactic elements may be related to the color, shape and motion of a particular object. On the other hand, the semantic elements may refer to information that cannot be extracted from low-level descriptors, such as the time and place of an event or the name of a person in a video sequence.

Given the background of digital video compression standards, such as MPEG-2 and MPEG-4, as well as standards, such as MPEG-7, that specify ways of describing the content, new applications that allow improved access to content will emerge. It is desired to provide video playback systems that enable such applications. Furthermore, the video playback systems should allow content-based access to remote, as well as, local content.

### SUMMARY OF THE INVENTION

The present invention provides a video playback system for processing an input compressed digital video signal. The playback system includes a receiver coupled to receive the input compressed digital video signal. During operation, a feature extraction unit, coupled to the receiver, dynamically extracts features from the input compressed digital video signal, and a description scheme instantiator, coupled to the feature extraction unit, encodes the extracted features as content descriptors, while receiving the input compressed digital video signal. In one aspect of the invention, a video source for the input compressed digital video signal can be either local or remote with respect to the receiver.

The video playback system can also include a search engine, coupled to the receiver, for accessing the received input compressed digital video signal according to the content descriptors. In this case, a user interface, coupled to the receiver and the search engine, accesses the input compressed digital video signal according to user commands related to the content descriptors.

A memory unit, coupled to the receiver via a memory controller, can be used to store the input compressed digital video signal and the content descriptors.

A symbol processor, coupled to the feature extraction unit, is used to extract motion vectors, macroblocks, and DCT coefficients from the input compressed digital video signal. A front-end parser, coupled to the feature extraction unit, is used to extract an electronic programming guide from the input compressed digital video signal.

A system demultiplexer, coupled to the feature extraction unit, can extract content production and usage information. A bitstream processor, connected to the memory unit, can be used to produce an output compressed digital video signal including the input compressed digital video signal and the content descriptors.

### BRIEF DESCRIPTION OF THE DRAWINGS

Figure 1 is a block diagram of a prior art video playback system;
Figure 2 is a block diagram of a receiver of the system of Figure 1;
Figure 3 is a high-level block diagram of a video playback system according to the invention;
Figure 4 is a low-level block diagram of the video playback system of Figure 3.
Figure 5 is a high-level block diagram of a video playback system including a channel surfer; and
Figure 6 is a block diagram of access methods for use with the video playback system of Figure 5.

### DETAILED DESCRIPTION OF PREFERRED EMBODIMENTS

### System Overview

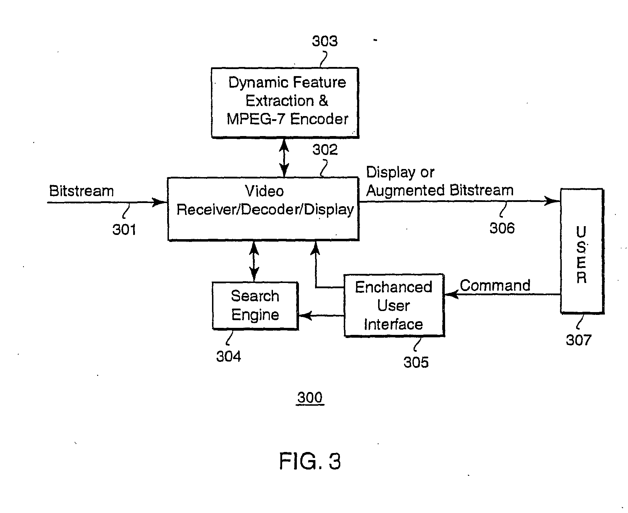

Figure 3 shows a video playback system 300 according to our invention at a high-level. The playback system includes a receiver/decoder/display ("receiver") 302. The receiver is connected to an encoder 303 and an optional search engine 304. The encoder and search engine are described in greater detail below. The receiver and search engine are manipulated by an enhanced user interface 305 that enables content-based access to a video. As with the system shown in Figures 1 and 2, a compressed digital input bitstream 301 is accepted by the video receiver.

To enable content-based access, our system performs dynamic feature extraction and MPEG-7 encoding using the encoder 303. The encoder generates content descriptions (augmented bitstream) 306. The augmented bitstream can include the original input bitstream 301. The search engine executes improved user commands to access the video, based on its content, using the encoded content descriptors. In contrast with the prior art system, the content-based access can be to local and or remote content.

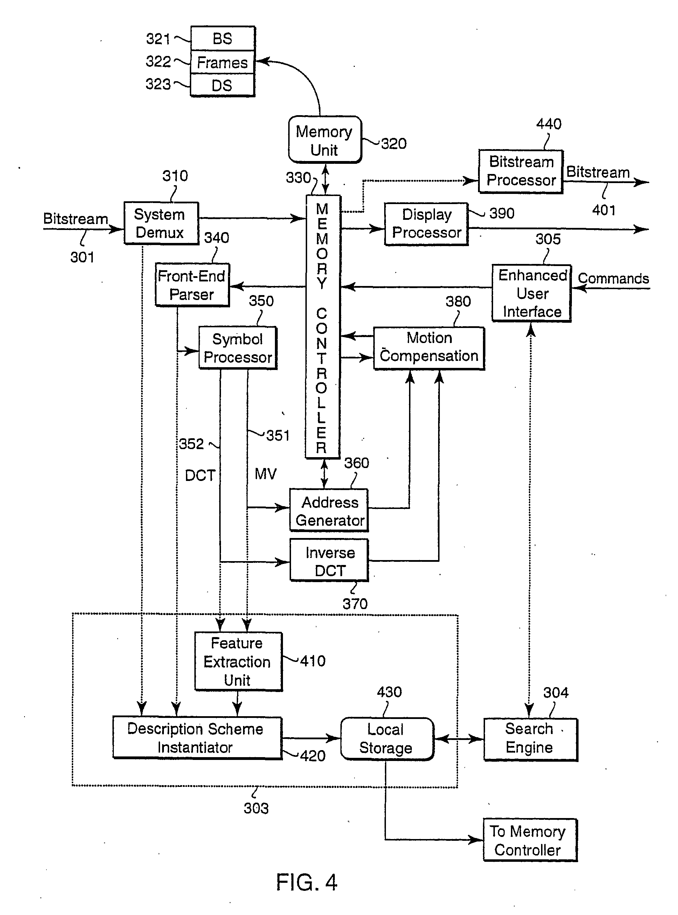

Figure 4 shows the playback system 300 in greater detail. Our playback system differs from the one shown in Figures 1 and 2 with regard to internal operation and output. The dotted lines in Figure 4 indicate connections to components that are not part of prior art video playback systems.

The playback system 300 includes a demultiplexer (demux) 310, a memory unit 320, and a memory controller 330, a front-end parser 340, and a symbol processor 350. These system components are used for feature extraction during a first stage of the decoding.

The system also includes an address generator 360, an inverse DCT (IDCT) 370, a motion compensator 380, and a display processor 390. These components are for image reconstruction during the a second stage of decoding. In certain operational modes described below, and in contrast with prior art receivers, these later components of the second stage can be turned off so that all of the memory bandwidth is dedicated to the feature extraction and encoding of the first stage.

The changes to internal operation are a result of a dynamic feature extraction unit 410 and an MPEG-7 description scheme instantiator 420 of the encoder 303. The extraction unit performs dynamic feature extraction as described herein. Low-level data, including motion vector information, DCT coefficients and shape information are passed from the symbol processor 350 to the feature extraction unit 410.

As described below, this data can be mapped to MPEG-7 descriptors, which are useful for search and retrieval. The mapping is performed by the MPEG-7 instantiator 420. The instantiator 420 can also receive information from the front-end parser 340 and system demultiplexer 310.

In a preferred embodiment, the encoder instantiates a description scheme according to a selected standard, for example, the MPEG-7 standard. It should be understood, that other types of encoders can instantiate to other standards. The description schemes are written to the local storage 430 that interacts with the search engine 304. Ultimately, the extracted data can be passed through the memory controller 330 to the main memory unit 320.

Therefore, in our playback system the memory unit stores three types of video data, all or part of the original compressed bitstream (BS) 321, selected or summary frames (frames) 322, and description schemes (DS) 323.

In addition to having feature extraction capabilities, our system can also output an augmented bitstream 401 via a bitstream processor 440. The bitstream processor receives this data from the main memory unit via the memory controller. The output bitstream can include compressed content, i.e., the original bitstream 301, content summaries, and content descriptions. The bitstream processor 440 formats the information in a way that is suitable for transmission to a user that is remote from the content.

The purpose of outputting content, and/or its corresponding description, is to provide a user with information that improves content-based access to remote content. Even though the information is extracted from local content, it still allows a remote playback system the flexibility to modify and alter the way that, from its perspective, the remote content is accessed.

### System Operation

Our video playback system extracts features dynamically from a compressed digital video signal. Using these features, improved content-based access to remote and local content can be achieved. By content-based access, we mean content retrieval, content decoding and content playback.

A key feature of our system is its interoperability with other devices. Interoperability can be achieved by using standard compression techniques to deliver and playback the content of a video, and standard description schemes (DS) to describe, retrieve and access the content. Our playback system can operate in a number of different modes.

### Partial Decoding

In a first mode, the received compressed bitstream is parsed and only partially decoded by our video playback system. Partial decoding is defined as only including the decoding operations of the first stage. Decoding of the second stage to reconstruct the video is disabled. In other words, in this mode, unlike a traditional receiver, there is no address generation, no computation of the inverse DCT, no motion compensation, and, of course, no display. That is, the second stage decoding is by-passed.

Because there is no display, all of the memory bandwidth can be dedicated to the partial decoding, feature extraction and encoding. Consequently, in this mode, the system is able to efficiently process selected elements of the compressed input bitstream to extract both low-level and high-level information about the content. Partial decoding can extract significant features in a relative short time. For example, an entire video can be processed in minutes, or less, instead of the hours required for a full viewing.

Examples of extracted bitstream elements that are useful for this purpose are motion vectors in the bitstream, DCT coefficients, and picture/macroblock coding modes. These elements are output from the symbol processor 350 and the front-end parser 340. Additionally, information may also be extracted from auxiliary bitstreams. Such information is output from the system demultiplexer (demux) 310. An example of such data includes Electronic Programming Guide (EPG) information and other types of meta-data, including MPEG-7 meta-data. EPG data may include annotated information about the content, such as a title of a movie, rating, and names of actors.

The advantage that one gains in partially decoding the bitstream and extracting information is that improved content-based access can be achieved in a relatively short time. This partial decoding mode is most applicable for access to pre-stored information, such as that on a DVD or other storage units of a local or remote playback system. Because partial decoding is very fast, e.g., minutes or less, the user will experience only a very small start-up delay to extract such information before content-based access is possible.

### Full Decoding

In contrast to the first partial decoding mode, a second mode differs in that no start-up delay is required. In this full decoding mode, features are extracted and encoded as content descriptors in the same way as described for the partial mode. However feature extraction is done concurrently with displaying of the video data. That is, the feature extraction and encoding is dynamic as the video is being played back. In this mode, content-based access to portions of the video that have already been viewed are possible.

### Hybrid Decoding

In a third mode, the bit stream is partially decoded while the compressed bitstream is received and processed at a highest possible bit rate. The partially decoded bitstream is stored in the memory unit 320. Concurrently, the stage two reconstruction also takes place from the decoded bitstream stored in the memory unit 320 so that the video can be displayed. During the period of time required to extract and encode the features from the entire video, the frame rate can be reduced to, for example, fifteen frames per second, or less, so that more system resources are available to the feature extraction and encoding. When the feature extraction and encoding is completed, the normal frame rate can resume. In a typical example application of this mode, the features are extracted from the video during the opening credits or trailers. By the time the "feature attraction" or actual movie starts, content-based access can commence on the entire video.

The key point, in any of these modes, is that meta-data, compliant with the selected standard, are extracted from the available compressed data. The available data may only be low-level features that are extracted from the compressed bitstream or information from an auxiliary data stream, even including some MPEG-7 meta-data, which may or may not be complete. With the MPEG-7 meta-data, it becomes possible to describe not only locally stored content, but also remotely stored content. In this way, interoperability with other devices is achieved. Some applications where our video playback system can be used are discussed below.

### Types of Improved Access

Improved access requires analysis of the video content. Although proprietary playback systems may in fact do such analysis and achieve some improvement over position-based access, it is important to note that the interoperability with other devices that proprietary video playback systems achieve is limited.

The types of improved access that we describe are enabled through the descriptors and description schemes that are specified, for example, by the emerging MPEG-7 standard. The standard is expected to be finalized by late 2001.

### Content Summary

Summarization of the content is an important feature for content-based access. With content summarization, it is possible to view significant portions of a video in a relatively short time. To generate a content summary, the video data need to be analyzed and a description scheme that provides links to important clips or segments of the video are specified. A summary may pertain to the highlights of some sporting event, the climatic scenes in a movie, or parts of a news program that have personal appeal. The corresponding description scheme that is generated, in compliance with the MPEG-7 standard, is said to be *instantiated.* A compliant MPEG-7 parser or Web browser understands an instantiated description scheme. After parsing, the corresponding summary can then be played back, i.e., displayed and viewed. Based on the summary, the user can select specific portions of the video to view in their entirety. Access to the selected content can be immediate, without the nuisance of having to jockey back and forth with the fast-forward, play, and rewind commands as in the prior art.

### Content Activity

Traversing the video according to its summary is only one content-based access method. However, content-based access according to the invention is more general. For instance, if one wants to view the most "active" content in a movie first, or the most humorous shots of a comedy show, then some means of describing this viewing order is necessary. The description schemes in MPEG-7 will include this feature. Further information on techniques that can be used can be found in U.S. Patent Application, Sn. 09/518,937 "Method for representing and comparing multimedia content using rank," filed by Divakaran et al. on March 6, 2000. The techniques described therein allow our playback system to rank the content in terms of syntactic and semantic information.

### Content Browsing

Other types of improved access include browsing multiple programs concurrently, and searching for content that is of interest for playback and/or recording. In a broadcast scenario, our video playback system may help a user locate content that is of particular interest, even where the user of the playback system is not always the same, i.e., there are multiple users for a particular display terminal. In this case, our playback system adapts to a specific user's preference by editing the existing meta-data. In this way, our playback system can automatically record video programs of interest.

To emphasize the aspect of interoperability, the content may be accessed by different users at a local site or at a remote site and the content may need to be accessed in different ways. For this reason, *dynamic* feature extraction is necessary so that the content *and* the content descriptions can be shared.

### Feature Extraction

Feature extraction from compressed bit-streams has been extensively reported in the literature. The chief advantage of such extraction is that it is computationally simple because it avoids computation of inverse DCT's by relying on the output of the demux, the parser, and the symbol processor. The output of the symbol processor contains motion vectors information (MV) 351 and DCT coefficients (DCT) 352.

The features most amenable to such extraction are color, luminance and motion. Note also that the output of the feature extraction unit 410 goes to the DS instantiator 420 which instantiates the descriptor values. The descriptor instantiations are then used for various applications such as browsing, summarization, and the like.

**Luminance and Color** - Note that with I-Frames, the output of the symbol processor 350 contains the "dc" values of the luminance and chrominance of the blocks. Thus, "dc-images" of the I-frames can be easily constructed using the output of the symbol processor 350. It is well known how to detect scene changes using dc-images. It is also possible to determine color descriptors such as dominant color, color histogram, compact color, GOF/GOP color histogram, color structure histogram, color layout, etc., from dc-images. For example, consider the binary syntax of the dominant color descriptor in Table A below:

**Table A**

| Dominant_Color { | No. of bits | Mnemonics |
|---|---|---|
| **ColorSpace** | Specified in 3.1.1.3 . | |
| **ColorQuantization** | Specified in 3.4.1.3 | |
| **DominantColorsNumber** | 3 bits | uimsbf |
| **ConfidenceMeasure** | 5 bits | uimsbf |
| } | | |
| struct DominantColor{ | No. of bits | |
| **ColorValue** | As defined in the color space | |
| **Percentage** | 5 bits | uimsbf |
| } | | |

Note that with a MPEG compressed video signal, the Color Space defaults to YUV or YcrCb, the Color Quantization, i.e., the number of bins, the beginning value of the color thresholds, etc., is decided by the feature extraction unit itself, as are the number of dominant colors. The Confidence Measure, Color Value and the Percentage are then determined from the image itself by using the dc value of the color of a macro-block as the color of every pixel that belongs to that macroblock. This briefly illustrates how the dominant color can be determined from the output of the symbol processor 350.

The output of the symbol processor has to be processed differently to get the dc-images from P-frames. The processing is different because macroblocks are usually predictively coded. To obtain the dc component, methods to perform the motion compensation in the DCT domain, such as those described in U.S. Patent Application 08/742,124 "Digital video decoder and method of decoding a video signal" may be used. Note that this computational overhead is significantly lower than that which is required by computing the inverse DCT.

**Motion -** Motion features are relatively easy to extract in the compressed domain, because, for motion compensated frames, the output of the symbol processor contains the motion vectors for each macro-block. Several approaches to feature extraction from motion vectors are possible, see U.S. Patent Application 09/236,838 "Method of feature extraction of video sequences."

The MPEG-7 motion descriptors that can be determined in the compressed domain include Motion Activity, Camera Motion, Motion Trajectory and Parametric Motion. Consider the Binary representation syntax of the motion activity descriptor as shown in Table B:

**Table B**

| MotionActivity { | No of Bits | Mnemonic |
|---|---|---|
| **Intensity** | 3 | uimsbf |
| **DirectionFlag** | 1 | blsbf |
| **SpatialDistributionFlag** | 1 | blsbf |
| **TemporalDistributionFlag** | 1 | blsbf |
| If (DirectionFlag == 0) | | |
| **DominantDirection** | 3 | uimsbf |
| If (SpatialDirectionFlag == 0) | | |
| **SpatialParameters={Nsr,Nmr,Nlr}** | 6,5,5 | uimsbf |
| If (TemporalDistributionFlag == 0) | | uimsbf |
| **TemporalParameters={N**_{**0**}**,N**_{**1**}**,N**_{**2**}**,N**_{**3**}**,N**_{**4**}**}** | 5*6 | uimsbf |
| } | | |

Note that all the fields shown above can easily be calculated from the motion vectors, which are output from the symbol processor. For example, the intensity parameter is calculated by first computing the standard deviation of the motion vector magnitude, then quantizing the standard deviation to a 3-bit value.

### Meta-Data Encoder

In MPEG-2 or MPEG-4, there is a well-specified encoder structure that must be used to generate a compliant bitstream. Conformance points are based on profile/level definition, i.e., an MPEG-2 Main Profile @ High Level (MP @ HL) encoder is restricted in terms of picture size, data rate, etc. However, we know that there must be some block to do motion estimation, a block to do DCT, etc. If we are operating in one of the scalability profiles, where we must encode a base and enhancement layer, then we know how the encoder structure needs to change. This is clearly defined by the standard.

In MPEG-7, an instantiating description scheme is like an MPEG-7 encoder. However, the Wide array of description schemes pertains to many different types of meta-data. How each type of data is generated may be unique and not specified by the standard. Because MPEG-7 is not likely to specify how the description schemes be instantiated, and this is a normative part of the standard, there is no structure to an MPEG-7 encoder. In this way, each DS must be instantiated on a case by case basis and should make sense within the scope of a particular application.

The point here is that a generic MPEG-7 encoder does not make sense unless there is a specific goal or application in mind. The objective is that our video playback system achieves improved content-based access. Therefore, the description schemes, that our playback system will instantiate and the method of instantiation is unique to our system, will be described in the following section.

Another point to make clear is that our playback system encodes meta-data to achieve interoperability with other devices. If not for interoperability, encoding meta-data in compliance with the MPEG-7 standard is not needed. A system may simply use its own proprietary descriptors and description schemes that are internal and understood only by that particular system. In this case, augmented bitstreams do not need to be output either.

### Details of Description Scheme Instantiator

Description schemes (DS) can be viewed as containers for descriptors. They can also be viewed as data structures that organize various descriptors. Consider the semantics of the MPEG-7 VideoSegment Description Scheme (DS) described in Appendix A as taken from the MPEG-7 Multimedia Description Scheme Working draft.

Notice how the VideoSegment DS encapsulates the Color and Motion Descriptors we alluded to in the section on descriptors. In this case, the description scheme can be instantiated by determining each of the constituent descriptors as described earlier. Note that the VideoSegment DS does lend itself to instantiation through feature extraction in the compressed domain. Thus DS's allow the use of individual descriptors by themselves, along with a combination of other descriptors to enable all possible MPEG-7 applications ranging from rapid content navigation, retrieval from video databases, surveillance, smart multimedia editing-presentation, etc.

The VideoSegment DS is an example of the MPEG-7 DS's that describe structural characteristics of content. Other such DS's include the Segment DS and its children, such as the Moving Region DS, etc. Other DS's emphasize applications such as summarization which is enabled by the Summary DS, Expression, and satisfaction of user preferences, which is enabled by the User Preferences DS, etc.

The Weight DS expresses the relative weighting of various descriptors in a description scheme. Thus, it can be instantiated at the MPEG-7 DS instantiator as per requirements. The Entity-Relation Graph DS expresses relationships between different entities. The output of the symbol processor enables identification of relations such as more active than or most active, or faster than, bigger than, greener than etc. Thus the class of corresponding Entity Relation Graphs can be instantiated in the compressed domain.

The Program Stream of digital video contains useful information such as the Electronic Programming Guide (EPG). The front-end parser 340 captures such information. Similarly the demux 310 captures information about the content production and usage. Such meta-data can be used to populate DS's such as the Media ID DS, Creation DS, etc.

There are basic DS's such as the Time DS, Media Locator DS, Grids, and Histograms, that are applicable to all the DS's and are, hence, of prime importance. Processing the output from the symbol processor 350 in the Instantiator 420 can populate all of these descriptor schemes. Using the time stamp information present in the compressed bitstream, for example, can populate the Time DS.

MPEG-7 also includes "higher-level" DS's that express textual description (annotation DS), Conceptual Aspects (e.g., Semantic DS) and Intrinsic Properties of Content (e.g., Model DS's).

In short, the information provided by the system demux 310, the front end parser 340 and the symbol processor 350 can be used to instantiate a powerful subset of description schemes.

### Interoperability Issues between Decoding Loop and Feature Extraction

For the partial decoding mode, interoperability is less of an issue. In the full decoding mode, interoperability may be an issue with respect to feature extraction and decoding, particularly when related to the granularity of the content-based access. For instance, when features are extracted from every frame or shot, a decision may need to be made to determine when are features overwritten or deemed useless.

### Enhanced User Interface

The enhanced user interface is a mechanism that interprets user commands and instructs various components of the system. The user can operate in two modes, an input mode, and an output mode. In the input mode, the user specifies how the feature extraction and encoding is to be performed, for example, whether the extraction should generate a summary, and the length of the summary. Also, in this mode, the user can specify specific features to extract, and other features to ignore. In output mode, the user specifies how and what content is to be viewed. The user commands allow for the improved content-based access described earlier, e.g., summarization, content-based content traversal, browsing of multiple programs and adaptability to user preferences. The main components of the system that are affected by the user interface include the search engine, encoder, and memory controller.

The enhanced user interface can be implemented with a keyboard, mouse, microphone, video camera, or sensor, or any other peripheral. In the case of keyboard and mouse input, the system has a Web-based interface that allows the user to type ones identification (and password, if required). This would access the user preferences for a particular person and would allow the user to type in syntactic and/or semantic information about the content being sought, along with the type of content being sought (e.g., images, video, particular formats, resolutions, etc). Such an interface may be most useful for search, filtering, and browsing applications. When desirable content is found, there may be a set of commands that can be pulled out of a menu, which allows the user to summarize and traverse the content in interesting and efficient ways.

With microphone and video camera inputs, the enhanced user interface accepts audio and visual commands. The enhanced user interface, via speech recognition, may have a limited set of verbal commands that allow the user to perform such tasks as begin/end a session, search for content and specify the types of content being sought. In fact, the query itself may be a clip of audio, e.g., the user hums the tune of an audio clip that would like to be found. Similarly, for video, the input may be a particular motion, such as a dance step or re-enactment of a sporting event.

For sensor input, the user may have some type of touch-pad that accepts fingerprints, for example. With such identification, identity can easily be established, and user preferences can be accounted for.

Regarding the affected system components, the search engine must process such commands that pertain to a matching procedure. The enhanced user interface would relay the semantic and syntactic input to the search engine, which would then locate the relevant and corresponding description schemes and provide a score regarding the degree to which the content matches the query. For content that matches well, commands must then be relayed to the memory controller so that this content can be located and sent to the display. In such a case, the address generator may also play a major role, i.e., translating desired content to actual addresses of the memory unit 320.

Besides the query and summarization type commands that the enhanced user interface must handle, it should also handle requests from users/devices for remote content and content descriptions. In this case, the interface requests the memory controller to locate remote compressed content and/or remote content descriptors and transfer this information to the other playback system via the bitstream processor 440. The bitstream processor may be responsible for multiplexing various streams, packetizing and smoothing the data in the buffer before transmission.

### Application Systems and Scenarios

The applications that our system can be used for extends to enhanced DVD players, home theater, content retrieval from local/remote servers and broadcast video.

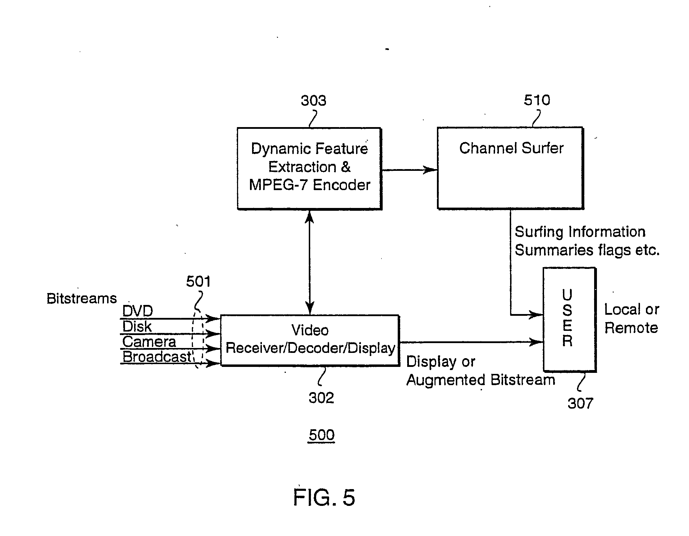

Figures 5 illustrate a generic video playback system 500. Here, the receiver 302 and encoder 303 are as described above. The search engine in this application is a channel surfer 510. The video source (content) 501 can be local or remote, for example, a video disk, such as a DVD, a disk such as would be connected to a local client or a remote server, a camera that captures live video and is compressed, or a transport stream from a broadcasting station. Content description may or may not be associated with the corresponding content.

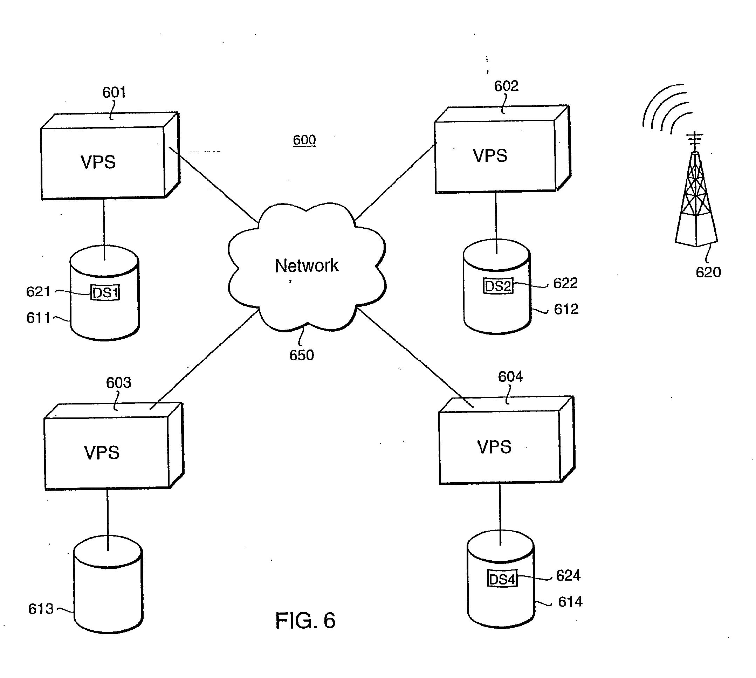

Figure 6 shows an arrangement 600 of multiple video playback systems 601-604, each VPS essentially as described above. The playback system may access corresponding local content 611-614, or remote content, e.g., VPS 602 desires content-based access to content 613. Therefore, where remote access is desired, the playback system is connected to a network 650, a local area network (LAN) or a wide area network (WAN) such as the Internet. Of course, if all access is to local content, then a network connection is not necessary.

The playback system 601 can generate its own content description DS1 621. The video data can then be played back with the improved content access as described above. Other playback systems, e.g., within the home 602, office 603, or university 604, can also access this content as well as the content description 621 generated by this system, if the system is connected to the network. Certain parts of the description may apply to all users, hence would not need any editing. However, other parts of the description may need editing to adapt to a particular user's preference. In this case, dynamic feature extraction would be applied and improved content access can be achieved at a different terminal.

In the event that a broadcaster 620 transmits the content, the content 612 can be stored locally by the playback system 602, provided that there are storage resources at the local playback system to accommodate this option. In this case, the dynamic feature extraction is applied to the local copy of the content 612 to generate a content description (DS2) 622.

However, in the event that such local storage resources do not exist in playback system 604, it can still access the remote content 612, and generate its own content descriptions (DS4) 624 for content 612. Using the described system, dynamic feature extraction enables a number of devices to share and edit content descriptions, whether the content is stored locally or remotely. This is done efficiently using feature extraction of compressed video and instantiating description schemes that enable improved content access.

### Multi-Channel Filtering

Another application system of interest is a multi-channel filtering system that allows filtering of desirable content from several channels of digital video. In the multi-channel filtering system, the channel surfer 510 is automatic. The surfer processes each of the channels periodically to extract features and determines "desirability" or "salient quality." By desirability, we mean proximity to the user's specified preferences e.g., the user may want to limit channel surfing to sports channels in which case non-sports channels would not be desirable.

By salient quality, we mean a distinguishing characteristic of the program that would help the user decide whether to further browse the video program, or not. For example, the user may want to first get a sense for the intensity of motion activity or action in each of the channels before selecting one or more of them. The computational speed of the surfer 510, and the number of channels, determine the time spent by the surfer 510 on each channel. There is an obvious trade-off between time spent on each channel and the surfing speed. Note that the more time spent on a channel, the more sophisticated the feature extraction can be.

It is clear then that the channel surfer occupies a middle ground between extracting features as the frames are displayed on one hand, and extracting features by completely traversing a stored version of the entire program on the other. On one hand, the channel surfer cannot afford to spend too much time on each channel, and thus in a real-time scenario, it cannot afford to store large chunks of any channel even if there is plenty of storage space available. On the other hand, the surfer's accuracy increases, as the stored chunks become bigger. Note that the channel surfer can provide raw features as well as higher level interpretations of the features such as visual summaries. For example, while watching a comedy show, the surfer can still track another program such as a sporting event. In this case, the surfer 510 signals the user 307 when an exciting event is taking place as determined from the motion activity feature extraction. The signal can be a displayed channel number, or a displayed key-frame, in miniature, on the screen or in any other unobtrusive but effective way.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. A video playback system for processing an input compressed digital video signal, comprising:
a receiver coupled to receive the input compressed digital video signal;
a feature extraction unit, coupled to the receiver, to dynamically extract features from the input compressed digital video signal; and
a description scheme instantiator, coupled to the feature extraction unit, to encode the extracted features as content descriptors, while receiving the input compressed digital video signal.

2. The video playback system of claim 1 further comprising:
a video source for the input compressed digital video signal local to the receiver.

3. The video playback system of claim 1 further comprising:
a video source for the input compressed digital video signal remote from the receiver.

4. The video playback system of claim 1 further comprising:
a search engine, coupled to the receiver, to access the received input compressed digital video signal according to the content descriptors.

5. The video playback system of claim 4 further comprising:
a user interface, coupled to the receiver and the search engine, to access the input compressed digital video signal according to user commands related to the content descriptors.

6. The video playback system of claim 1 further comprising:
a memory unit, coupled to the receiver via a memory controller, to store the input compressed digital video signal and the content descriptors.

7. The video playback system of claim 1 wherein the receiver further comprises:
a symbol processor, coupled to the feature extraction unit, to extract motion vectors and macroblocks and DCT coefficients from the input compressed digital video signal.

8. The video playback system of claim 1 wherein the receiver further comprises:
a front-end parser, coupled to the feature extraction unit, to extract electronic programming guide from the input compressed digital video signal.

9. The video playback system of claim 1 wherein the receiver further comprises:
a system demultiplexer, coupled to the feature extraction unit, to extract content production and usage information.

10. The video playback system of claim 6 further comprising:
a bitstream processor, connected to the memory unit, to produce an output compressed digital video signal including the input compressed digital video signal and the content descriptors.

11. The video playback system of claim 1 wherein video reconstruction is disabled while features are extracted and encoded as content descriptors.

12. The video playback system of claim 1 wherein video reconstruction is performed concurrently while features are extracted and encoded as content descriptors.

13. The video playback system of claim 1 wherein video reconstruction is performed at a reduced frame rate concurrently while features are extracted and encoded as content descriptors.

14. The video playback system of claim 1 wherein the content descriptors are encoded according to a video encoding standard.

15. The video playback system of claim 14 wherein the video encoding standard is MPEG-7.

16. The video playback system of claim 10 wherein the output compressed digital video signal is transmitted to a remote receiver.

17. The video playback system of claim 1 wherein the encoder generate a summary of the input compressed digital video signal according to the content descriptors.

18. The video playback system of claim 15 wherein the summary of the input compressed digital video signal is stored in a memory unit of the receiver.

19. The video playback system of claim 1 wherein the content descriptors are based on activity in the input compressed digital video signal.

20. The video playback system of claim 4 wherein the search engine browses a plurality of input compressed digital video signals according to the content descriptors.

21. A method for processing an input compressed digital video signal, comprising:
receiving the input compressed digital video signal;
extracting features from the input compressed digital video signal; and
encoding the extracted features as content descriptors, while receiving the input compressed digital video signal.

22. The method of claim 21 further comprising:
accessing the received input compressed digital video signal according to the content descriptors.

23. The method of claim 21 further comprising:
storing the content descriptors in a memory unit.

24. The method of claim 21 further comprising:
generating a summary of the input compressed digital video signal according to the content descriptors.
